# FASCICULE DE BREVET EUROPEEN

(11) **EP 0 595 680 B1**
(45) Date de publication et mention de la délivrance du brevet: **30.07.1997**
(21) Numéro de dépôt: 93402539.6
(22) Date de dépôt: 14.10.1993
(51) Int. Cl.: B29C 51/16, B29C 51/20

(54) **Dispositif de thermoformage pour la fabrication de récipients, à partir d'un film thermoplastique, avec banderoles-décors**
Wärmeformvorrichtung zum Herstellen von Behältern aus einem Kunststoffilm mit Dekorbandrolen
Thermoforming device for fabricating of containers from a plastic film with a decorated banderole

(30) Priorité: 28.10.1992 FR 9212869
(43) Date de publication de la demande: 04.05.1994
(73) Titulaire: Hassia Verpackungsmaschinen GmbH, D-63689 Ranstadt (DE)
(72) Inventeur: Walter, Kurt, D-6475 Glauburg (DE); Fanton, Michel, F-91220 Bretigny/Orge (FR)
(74) Mandataire: Wolf, Günter, Dipl.-Ing.

(56) Documents cités:
- EP-A- 0 296 302
- FR-A- 2 110 231
- FR-A- 2 482 558

## Description

La présente invention concerne un dispositif de thermoformage pour la fabrication de récipients ou pots à partir d'un film thermoplastique.

Elle s'applique en particulier à la fabrication de pots en plastique destinés à contenir des produits alimentaires, notamment du yaourt. Ces pots sont présentés dans le commerce sous forme de lots comprenant plusieurs pots, par exemple au nombre de quatre, les pots étant reliés entre eux par une collerette commune en partie supérieure. Les parties de liaison des pots sont sécables de manière à pouvoir séparer, à volonté, un pot du lot.

Chaque pot comporte généralement une banderole-décor collée sur sa surface externe permettant d'afficher le nom commercial du produit ainsi que différentes informations destinées aux consommateurs.

On connaît déjà dans l'état de la technique des dispositifs de thermoformage destinés à la fabrication de pots en plastique par lots de plusieurs pots.

DE-A-38 37 706 décrit un dispositif de thermoformage comportant un moule muni de douze alvéoles réparties sur deux lignes de six alvéoles. Ce moule est destiné à coopérer avec un contre-moule de forme complémentaire pour le thermoformage d'un film plastique de façon à former, en une seule étape, un lot de douze pots correspondant aux douze alvéoles du moule. Dans ce dispositif, les banderoles-décors destinées à revêtir la surface externe des pots sont introduites directement à l'intérieur des alvéoles correspondantes du moule, par des fentes de celui-ci, avant le thermoformage du film plastique.

Au cours de l'opération de thermoformage, les banderoles-décors disposées directement à l'intérieur des alvéoles et préalablement enduites d'une laque adhésive thermosensible, adhèrent sur la surface externe des pots sous l'effet de la température encore élevée du film thermoplastique.

Chaque face longitudinale du moule comporte une série de six fentes transversales d'introduction de banderoles associées à six alvéoles alignées. Ces fentes sont destinées à être alignées avec des couloirs dans lesquels sont disposées des banderoles-décors en position d'attente avant leur introduction directement à l'intérieur des alvéoles. Toutes les banderoles-décors sont introduites simultanément directement à l'intérieur des alvéoles correspondantes du moule.

L'invention a pour but de proposer un dispositif de thermoformage d'un film thermoplastique comprenant un moule dans lequel sont ménagées des alvéoles destinées à former un lot de pots, et des moyens d'introduction simultanée de banderoles-décors directement à l'intérieur des alvéoles du moule, avant thermoformage du film, le moule comportant éventuellement plus de deux lignes d'alvéoles, en vue par exemple de fabriquer un lot de pots comprenant vingt quatre pots disposés en quatre lignes.

A cet effet l'invention a pour objet un dispositif de thermoformage d'un film thermoplastique pour la fabrication de récipients destinés à être revêtus par des banderoles formant décors, du type comprenant un moule, de forme générale parallélépipèdique, comportant des alvéoles de formage ouvertes sur sa face supérieure, disposées suivant un réseau à mailles carrées définissant des lignes d'alvéoles parallèles aux faces longitudinales du moule et des colonnes d'alvéoles perpendiculaires à ces lignes, le moule étant porté par un plateau de presse déplaçable verticalement entre une position haute de formage et une position basse de démoulage, le dispositif comprenant de plus des moyens de distribution et d'acheminement des banderoles-décors directement à l'intérieur des alvéoles comprenant des couloirs d'introduction des banderoles-décors directement à l'intérieur des alvéoles, caractérisé en ce que le moule comprend au moins deux éléments déplaçables l'un par rapport à l'autre dans chacun desquels est ménagée une ligne d'alvéoles, chaque élément comportant des fentes transversales d'introduction des banderoles-décors directement à l'intérieur des alvéoles, le dispositif comprenant de plus des moyens de déplacement relatif des éléments entre une configuration du moule adaptée au formage, en position haute du plateau, dans laquelle le réseau d'alvéoles est constitué, et une configuration du moule adaptée pour l'introduction de banderoles-décors directement à l'intérieur des alvéoles, en position basse du plateau, dans laquelle toutes les fentes du moule sont mises en communication avec les couloirs correspondants de distribution des banderoles-décors.

Suivant un premier mode de réalisation de l'invention, les couloirs de distribution sont disposés dans un même plan horizontal, les moyens de déplacement relatif des éléments comprennent des moyens de décalage longitudinal des éléments entre eux permettant d'aligner chaque fente d'introduction, masquée lorsque le moule est en configuration de formage, avec une fente intermédiaire ménagée transversalement dans chaque élément disposé entre cette fente d'introduction et les couloirs de distribution, et les moyens d'acheminement des banderoles-décors directement à l'intérieur des alvéoles comportent des moyens d'entraînement ayant des vitesses adaptées pour que les banderolles-décors parcourent les trajets entre les couloirs de distribution et les alvéoles dans un temps identique quelques soient les différences de longueurs de ces trajets.

Suivant un second mode de réalisation de l'invention, les moyens de distribution comprennent au moins deux ensembles-distributeurs, comportant chacun une rangée de couloirs, disposés dans des plans horizontaux décalés en hauteur, les moyens de déplacement relatif des éléments comprennent des moyens de décalage vertical des éléments entre eux permettant de positionner chacun des éléments de manière que ses fentes d'introduction soient alignées avec une rangée de couloirs de distribution correspondants, les trajets entre les couloirs d'introduction et les fentes d'introduction correspondantes étant tous de longueurs identiques.

Suivant une caractéristique commune à ces deux modes de réalisation, le moule comprend quatre éléments dans chacun desquels est ménagée une ligne d'alvéoles, chaque fente d'introduction ménagée dans ces éléments étant orientée d'une alvéole correspondante vers la face longitudinale du moule la plus proche de cette alvéole.

Suivant des caractéristiques du premier mode de réalisation :
- les moyens de décalage longitudinal comprennent un tiroir monté coulissant longitudinalement sur le plateau de presse, le moule comprenant deux éléments solidaires du tiroir alternant chacun avec deux éléments solidaire du plateau de presse, le déplacement longitudinal du tiroir étant commandé par le déplacement vertical du plateau de presse ;
- les moyens de commande du déplacement du tiroir comprennent un bras de traction, solidaire du tiroir, comportant à son extrémité libre un galet destiné à coopérer avec une glissière fixe, s'étendant sensiblement verticalement, munie d'une rampe orientée de manière à déplacer le bras longitudinalement lorsque le galet se déplace verticalement conjointement avec le plateau de presse ;
- le tiroir comprend deux évidements d'extrémité et une lumière centrale permettant à l'élément intercalé entre les deux éléments solidaires du tiroir d'être en appui sur des cales fixées sur le plateau de presse ;
- les moyens d'acheminement comprennent des préhenseurs coopérant chacun avec une banderolle-décor, les préhenseurs destinés à acheminer des banderolles-décors sur des trajets de longueurs identiques étant portés par deux tringles se déplaçant dans des sens opposés, solidaires d'un organe d'entraînement commun, les rapports de vitesse entre les deux organes d'entraînement étant adaptés aux différentes longueurs des trajets de manière à les parcourir en un temps identique;
- chaque organe d'entraînement comprend une courroie, les courroies des organes d'entraînement étant couplées entre elles par des moyens de réduction de vitesse à courroie de manière que la vitesse des préhenseurs se déplaçant sur les trajets les plus courts soit inférieure à la vitesse des préhenseurs se déplaçant sur les trajets les plus longs, les deux tringles se déplaçant à des vitesses identiques étant disposées symétriquement par rapport à l'axe longitudinal médian du moule, la première tringle étant accrochée à un premier brin de la courroie correspondante, et la seconde tringle étant accrochée au second brin de cette courroie ;
- les tringles, destinées à se déplacer dans un même sens, sont disposées l'une au-dessus de l'autre, la tringle inférieure comportant des évidements formant logement pour les préhenseurs portés par la tringle supérieure de manière que les préhenseurs portés par ces tringles soient alignés entre eux en position initiale d'introduction des banderolles-décors directement à l'intérieur des alvéoles.

Suivant des caractéristiques du second mode de réalisation :
- les deux éléments disposés au milieu du moule, appelés éléments internes, sont solidaires l'un de l'autre et forment un seul corps central fixé sur le plateau de presse, les deux éléments délimitant les faces longitudinales du moule, appelés éléments externes, sont solidaires l'un de l'autre et forment un seul corps périphérique monté coulissant sur des montants verticaux fixes, le plateau de presse comporte des ailes, s'étendant parallèlement aux éléments externes, destinées à coopérer avec la face inférieure du corps périphérique de manière à déplacer ce dernier, et les moyens de décalage vertical des éléments entre eux comprennent une butée fixe destinée à désolidariser le corps périphérique du plateau de presse, lorsque ce dernier descend vers sa position basse, et à positionner le corps périphérique à hauteur des couloirs de distribution supérieurs, le corps central étant à hauteur des couloirs de distribution inférieurs, lorsque le plateau de presse est en position basse ;
- le corps périphérique comprend une partie inférieure formant cadre, et deux parties supérieures, fixées sur le cadre, dans lesquelles sont ménagées les alvéoles des éléments externes, les côtés du cadre parallèles aux colonnes d'alvéoles du moule étant montés coulissants le long des montants ;
- chaque ensemble-distributeur inférieur comporte des branches transversales dans lesquelles sont ménagés les couloirs, les extrémités en regard des fentes d'introduction des couloirs supérieurs et des couloirs inférieurs disposés d'un même côté du moule, étant décalées entre elles, dans une direction parallèle aux couloirs, d'une distance correspondant sensiblement à la largeur d'un élément externe, et les ailes du plateau de presse comportent des saignées transversales formant des passages pour les branches de chaque ensemble-distributeur inférieur ;
- les moyens d'acheminement comprennent des préhenseurs coopérant chacun avec une banderole-décor, les préhenseurs destinés à acheminer des banderoles-décors dans des alvéoles d'un même élément étant portés par une même tringle solidaire de moyens d'entraînement à courroies, toutes les tringles se déplaçant à des vitesses identiques.

Suivant des caractéristiques communes à ces deux modes de réalisation :
- les préhenseurs sont du type à aspiration d'air;
- chaque élément comporte une partie supérieure dans laquelle sont ménagées les alvéoles et une partie inférieure creuse délimitant une chambre, sensiblement prismatique, ouverte sur la face inférieure du moule, dans laquelle est montée coulissante une plaque horizontale formant support pour des tambours déplaçables dans les alvéoles, la face supérieure de chaque tambour délimitant un fond mobile de l'alvéole dans laquelle il coulisse.

Suivant une caractéristique du second mode de réalisation, les chambres des éléments externes sont ménagées dans le cadre et les éléments internes comportent une chambre commune et une plaque-support coulissante commune.

Des exemples de réalisation de l'invention seront décrits ci-dessous en se référant aux dessins annexés dans lesquels :
- la figure 1 est une vue en élévation, avec une coupe partielle, d'un dispositif de thermoformage selon un premier mode de réalisation de l'invention, le moule étant dans une position haute de formage ;
- la figure 2 est une vue de dessus du dispositif de la figure 1 ;
- la figure 3 est une vue en coupe selon la ligne 3-3 de la figure 2, le moule étant dans une position basse d'introduction des banderoles-décors ;
- la figure 4 est une vue de dessus du dispositif de thermoformage tel que représenté à la figure 3 ;
- la figure 5 est une vue en coupe suivant la ligne 5-5 de la figure 3 ;
- la figure 6 est une vue en coupe suivant la ligne 6-6 de la figure 3 ;
- la figure 7 est une vue en coupe suivant la ligne 7-7 de la figure 3 ;
- la figure 8 est une vue en coupe suivant la ligne 8-8 de la figure 3 ;
- la figure 9 est un vue de détail de la partie cerclée 9 de la figure 3 ;
- la figure 10 est une vue en coupe suivant un plan perpendiculaire aux lignes d'alvéoles du moule d'un dispositif de thermoformage selon un second mode de réalisation de l'invention, le moule étant dans une configuration d'introduction de banderoles-décors ;
- la figure 11 est une demi-vue en coupe selon la ligne 11-11 de la figure 10 ;
- la figure 12 est une demi-vue en coupe simplifiée pour des raisons de clarté, suivant la ligne 12-12 de la figure 10 ;
- la figure 13 est une vue de dessus du moule du dispositif de thermoformage de la figure 10 avec une coupe partielle selon la ligne 13-13 de la figure 11 ;
- la figure 14 est une demi-vue similaire à la figure 10, le moule étant dans une position intermédiaire avant formage ;
- la figure 15 est une demi-vue similaire à la figure 10, le moule étant dans une position haute de formage.

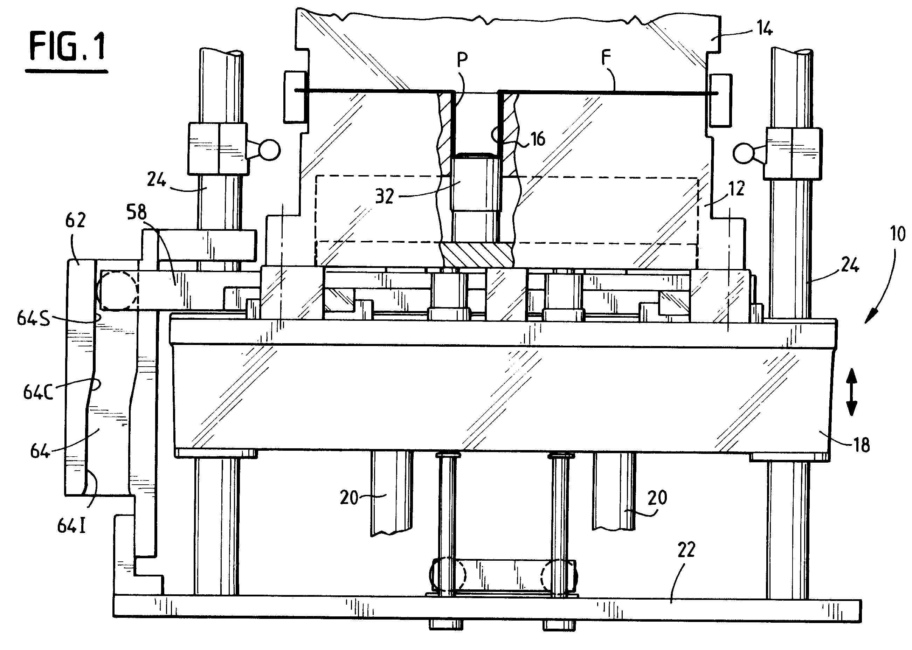

On a représenté sur les figures 1 à 8 un dispositif de thermoformage selon un premier mode de réalisation de l'invention, désigné par la référence générale 10, destiné à la fabrication de pots P à partir d'un film thermoplastique F.

Comme on peut le voir sur la figure 1, le dispositif 10 comporte un moule 12 et un contre-moule 14 destiné à coopérer l'un avec l'autre avec interposition entre leurs faces de formage du film thermoplastique F.

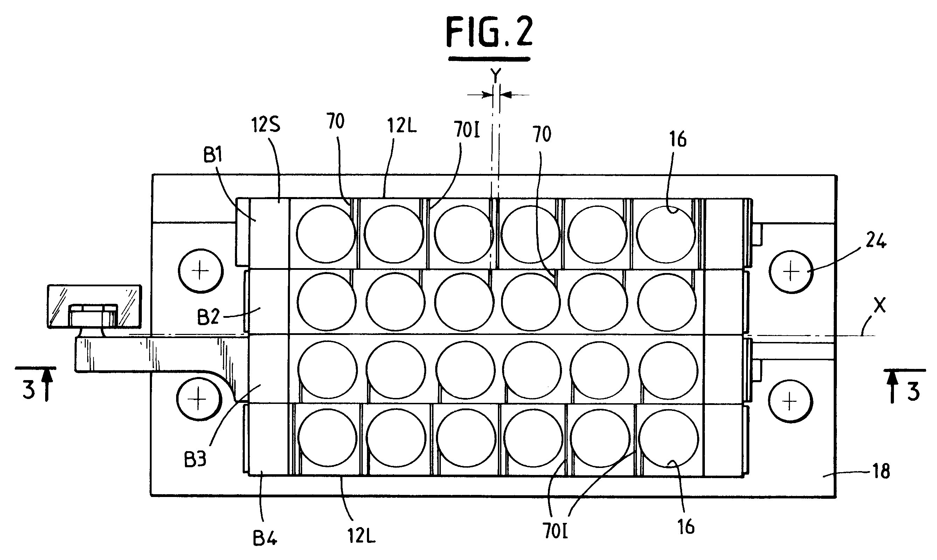

Le moule 12 est de forme générale parallélépipèdique et, comme on peut le voir sur la figure 2, comporte vingt quatre chambres de formage ou alvéoles 16 de formage ouvertes sur sa face supérieure 12S en étant disposées suivant un réseau à mailles carrées définissant des lignes de six alvéoles 16 chacune, parallèles aux faces longitudinales 12L du moule, et des colonnes de quatre alvéoles 16 chacune, perpendiculaires à ces lignes.

Les alvéoles 16 ont une forme générale connue, à peu près cylindrique, de manière à donner une forme similaire aux pots P en plastiques lors du thermoformage.

De façon classique, le moule 12 et le contre-moule 14 sont portés par des moyens déplaçables verticalement.

Le moule 12 est porté par un support 18 horizontal, appelé plateau de presse, fixé sur des chandelles 20 montées coulissantes verticalement dans un châssis fixe 22 du dispositif 10.

Le châssis 22 comporte quatre montants 24 verticaux le long desquels coulisse le plateau de presse 18.

On a représenté sur la figure 1 le moule 12 en position haute et le contre-moule 14 en position basse de thermoformage.

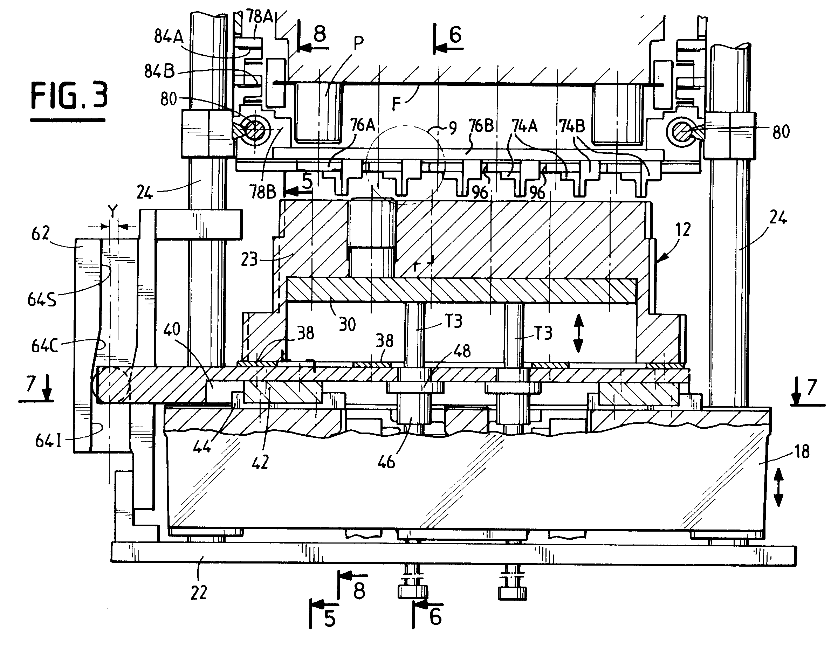

De façon classique, le démoulage des pots P se fait par la descente du moule 12. Sur la figure 3, on a représenté le moule 12 en position basse, les pots P étant extraits du moule 12.

Une fois que le lot de pots P est démoulé, le film F est déplacé dans un sens perpendiculaire aux figures 1 et 3 à l'aide de moyens connus, non représentés sur les figures, de manière à amener au droit du moule 12 une nouvelle portion de film F destinée à être moulée.

Comme on peut le voir en particulier sur la figure 2, le moule 12 comporte quatre éléments B1 à B4 dans chacun desquels est ménagée une ligne d'alvéoles 16.

Ces éléments B1 à B4 sont déplaçables entre eux de manière à permettre l'introduction de banderoles-décors directement à l'intérieur des alvéoles 16 destinées à revêtir les pots P, comme cela sera décrit ultérieurement.

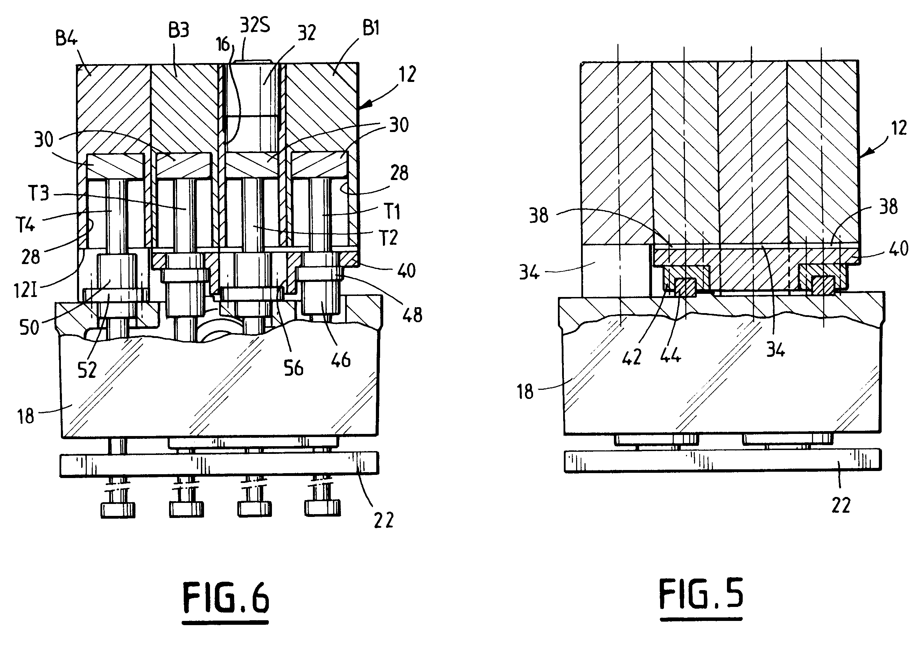

Comme on peut le voir en particulier sur les figures 3 et 6, chaque élément B1 à B4 comporte une partie supérieure dans laquelle sont ménagées les alvéoles 16 et une partie inférieure creuse délimitant une chambre 28, sensiblement prismatique, ouverte sur la face inférieure 12I du moule, dans laquelle est montée coulissante une plaque 30 horizontale formant support pour des tambours 32 déplaçables dans les alvéoles 16 correspondantes.

La face supérieure 32S de chaque tambour 32 délimite un fond mobile de l'alvéole 16 dans laquelle il coulisse.

Pour des raisons de clarté, on a représenté sur les figures 3 et 6 un seul tambour 32.

Chaque plaque-support 30 est portée par deux tiges T1-T4 verticales montées coulissantes à travers la face inférieure 12I du moule et à travers le plateau de presse 18.

Le déplacement des tiges T1-T4 est commandé par des moyens de type connu, non représentés sur les figures, de manière à adapter la position des fonds 32S des alvéoles 16 en fonction des différentes étapes du cycle de thermoformage.

On décrira maintenant les moyens de déplacement relatif des éléments B1 à B4, selon le premier mode de réalisation de l'invention.

Comme on peut le voir en particulier sur les figures 3 et 5, les éléments B1 à B4 sont fixés par des moyens connus, en alternance, les uns sur des cales 34,36 solidaires du plateau de presse 18, et les autres sur des cales 38 solidaires d'un tiroir 40 déplaçable longitudinalement parallèlement aux lignes d'alvéoles du moule 12.

Ce tiroir 40 comporte quatre glissières 42, fixées par des moyens connus sur sa face inférieure, coopérant avec des rails 44 correspondants, fixés par des moyens connus sur le plateau de presse 18, s'étendant parallèlement aux lignes d'alvéoles du moule 12.

Comme on peut le voir en particulier sur les figures 3 et 6, les tiges T1,T3, portant les plaques-supports 30 déplaçables dans les éléments B1,B3 solidaires du chariot 30, coulissent dans des guides 46 munis de flasques de fixation 48 vissés sur le tiroir 40.

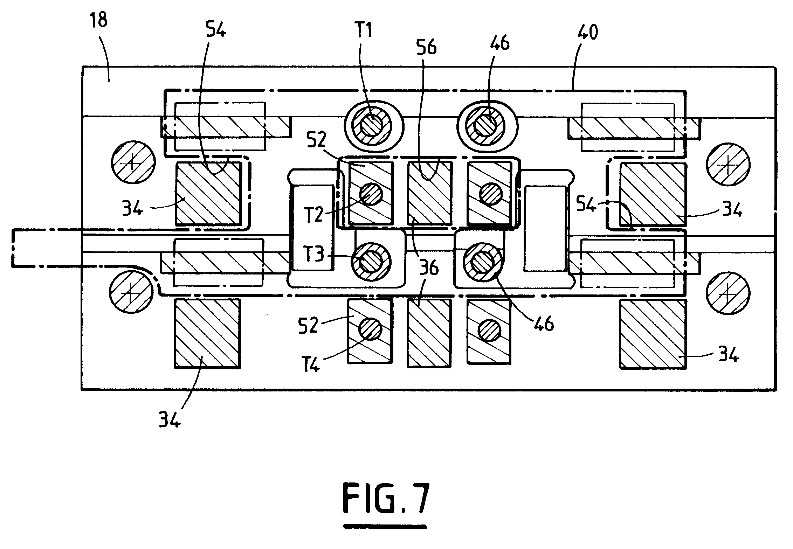

Par ailleurs, comme on peut le voir en particulier sur la figure 6 et sur la figure 7 sur laquelle on a représenté le tiroir 40 en traits mixtes, les tiges T2,T4, portant les plaques-supports 30 déplaçables dans les éléments B2,B4 solidaires du plateau de presse 18, coulissent dans des guides 50 munis de flasques de fixation 52 vissés sur le plateau de presse 18.

Bien entendu, le plateau de presse 18 et le tiroir 40 comportent des perçages et des ouvertures adaptés de manière à permettre le passage des tiges T1-T4 portant les plaques 30, les dimensions de ces perçages ou de ces ouvertures étant adaptées pour permettre un mouvement relatif de translation entre le plateau de presse 18 et le tiroir 40.

Deux évidements d'extrémité 54 et une lumière centrale 56 ménagée dans le tiroir 40 permettent l'appui de l'élément B2 sur les cales 34,36 solidaires du plateau de presse 18.

Comme on peut le voir sur les figures 1 à 4, le tiroir 40 est prolongé à une de ses extrémités, à gauche en considérant les figures, par un bras de traction 58 dont l'extrémité libre comporte un galet 60 destiné à coopérer avec une glissière 62 solidaire du châssis 22.

Cette glissière 62 comporte une rainure 64, s'étendant sensiblement verticalement, dont les bords sont destinés à coopérer avec la surface de roulement du galet 60.

Comme on peut le voir sur les figures 1 et 3, la rainure 64 comprend un tronçon supérieur 64S et un tronçon inférieur 64I reliés entre eux par une partie inclinée 64C formant rampe.

Les deux tronçons inférieur et supérieur ont des axes médians verticaux décalés, dans la direction de l'axe longitudinal médian X du moule, d'une distance Y.

Le déplacement du moule 12, entre sa position haute, telle que représentée à la figure 1, et sa position basse, telle que représentée à la figure 3, a pour effet de faire coopérer le galet 60 avec la rampe 64C et par conséquent de déplacer le tiroir 40 d'une distance Y dans la direction de l'axe X.

Le déplacement du tiroir 40 permet donc de décaler longitudinalement les éléments B1,B3 solidaires du tiroir 40 par rapport aux éléments B2,B4 solidaires du plateau de presse 18.

On décrira maintenant des moyens d'approvisionnement de banderoles-décors de type connu directement à l'intérieur des alvéoles 16 du moule 12, selon le premier mode de réalisation de l'invention.

De façon classique, les banderoles-décors sont formées à partir de bandes continues tronçonnées et sont acheminées, par des moyens connus, dans des moyens de distribution, avant d'être introduites directement à l'intérieur des alvéoles 16.

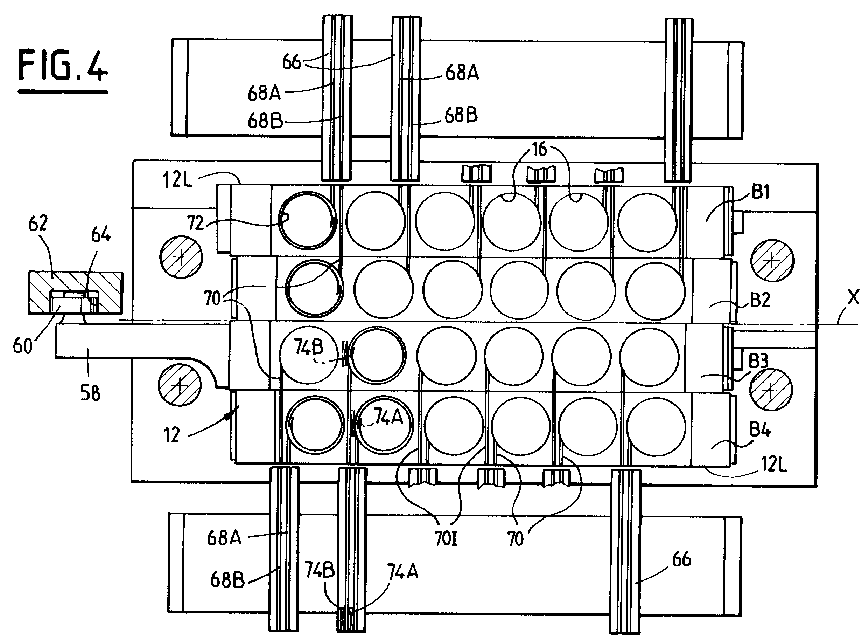

Ces moyens de distribution comportent douze blocs-distributeurs 66, agencés par des moyens connus dans un même plan horizontal en deux rangées de six disposées de part et d'autre des faces longitudinales 12L du moule, comme cela est représenté à la figure 4.

Deux saignées 68A,68B parallèles, formant couloirs d'attente pour des banderoles-décors, sont ménagées dans chaque bloc-distributeur 66, perpendiculairement aux faces longitudinales 12L du moule.

Comme on peut le voir sur les figures 2 et 4, chaque élément B1 à B4 comporte des fentes transversales 70 d'introduction de banderoles-décors directement à l'intérieur des alvéoles 16, sensiblement tangentes à ces alvéoles 16.

Chaque fente d'introduction 70 est orientée d'une alvéole 16 correspondante vers la face longitudinale 12L du moule la plus proche de cette alvéole 16.

Les éléments B1,B4 délimitant les faces longitudinales 12L du moule, appelés éléments externes, comportent de plus des fentes transversales intermédiaires 70I, les traversant de part en part sans intersection avec les alvéoles 16.

Lorsque le moule 12 est en position haute, sa configuration est adaptée au formage et le réseau d'alvéoles 16 est constitué, les alvéoles 16 d'une même colonne étant parfaitement alignées entre elles, comme cela est représenté à la figure 1. Dans cette configuration du moule 12, les fentes d'introduction 70 ménagées dans les éléments B2,B3 disposés au milieu du moule, appelés éléments internes, sont masquées par les éléments externes B1,B4.

On notera que dans la configuration de formage du moule 12, les fentes intermédiaires 70I sont décalées suivant l'axe X par rapport aux fentes d'introduction 70 d'une distance Y correspondant à la course du tiroir 40 entre la position haute et la position basse du moule 12.

Lorsque le moule 12 est en position basse, sa configuration est adaptée pour l'introduction des banderoles-décors directement à l'intérieur des alvéoles 16, les alvéoles 16 d'une même colonne étant décalées entre elles d'une distance Y par déplacement du tiroir 40, comme cela est représenté à la figure 3. Dans cette configuration du moule 12, les fentes intermédiaires 70I sont alignées avec les fentes d'introduction 70 des éléments internes B2,B3. Par ailleurs, chaque bloc-distributeur 66 comporte un premier couloir 68A aligné avec une fente d'introduction 70 d'un élément externe B1,B4 et un second couloir 68B aligné avec une fente intermédiaire 70I prolongeant une fente d'introduction 70 d'un élément interne B2,B3.

De cette façon, dans la configuration du moule 12 adaptée pour l'introduction de banderoles-décors, chaque alvéole 16 du moule 12 est mise en communication avec un couloir 68A,68B comportant une banderole-décor en attente d'introduction. De façon classique, dans cette configuration du moule 12, la face supérieure de celui-ci et la face supérieure des blocs-distributeurs 66 sont alignées.

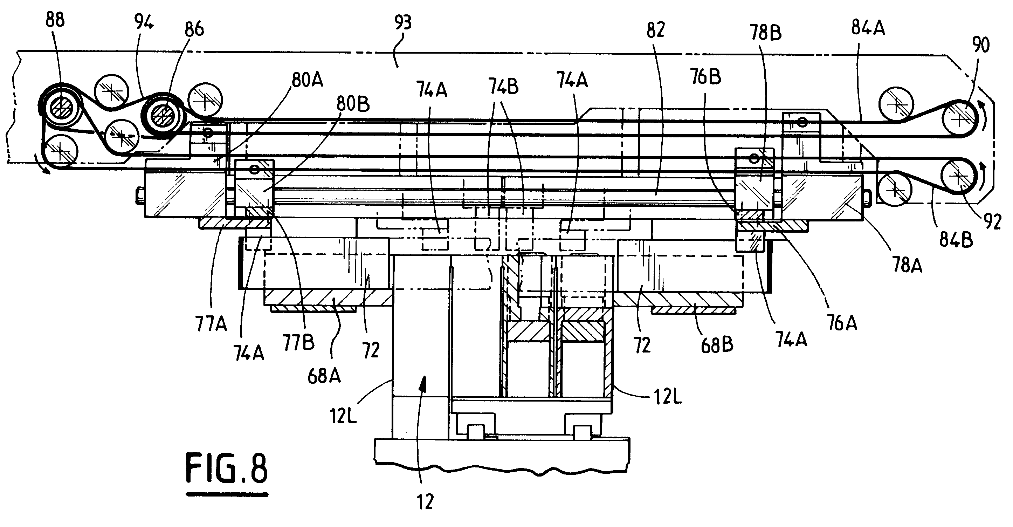

Sur la figure 8 on a représenté des banderoles-décors 72 de type connu disposées en position d'attente dans les couloirs 68A,68B.

De façon classique, la longueur des banderoles-décors 72 est parallèle à celle des couloirs 68A,68B, et la profondeur de ces derniers est inférieure à la largeur des banderoles-décors 72 de manière que celles-ci dépassent de la partie supérieure des couloirs 68A,68B.

En position d'attente, les banderoles-décors 72 ont leurs extrémités proches du moule 12 alignées entre elles.

Les banderoles-décors 72 sont acheminées depuis les couloirs 68A,68B jusqu'aux alvéoles 16 correspondantes par des préhenseurs 74A,74B à aspiration d'air, de type connu, représentés aux figures 3,8 et 9, cette dernière figure étant une vue de détail des préhenseurs.

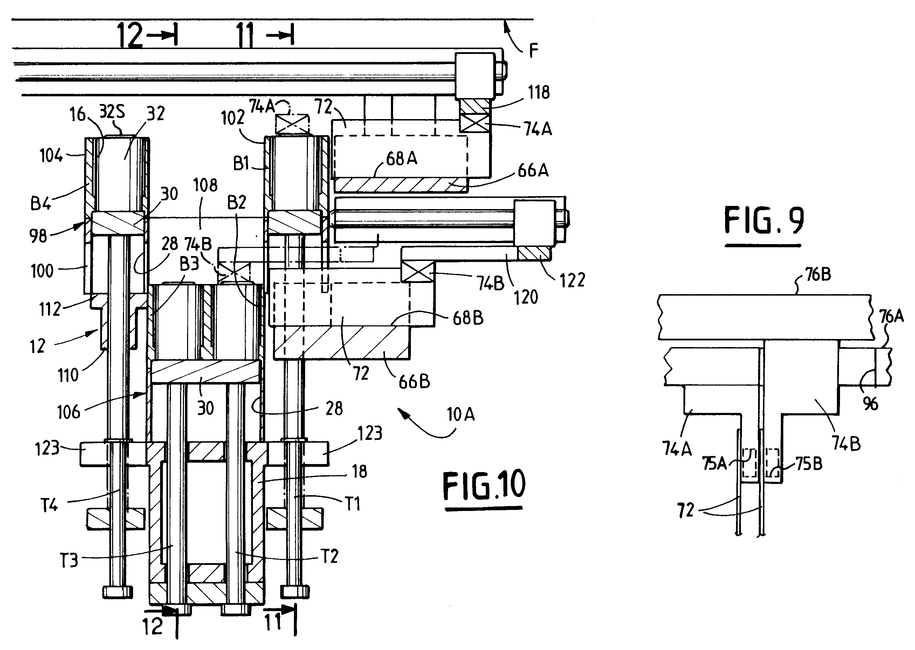

Les préhenseurs 74A,74B, au nombre de vingt quatre, sont destinés à saisir les banderoles-décors 72 par leurs extrémités opposées aux faces longitudinales 12L du moule. Sur la figure 9, on a représenté des orifices d'aspiration 75A,75B ménagés dans les préhenseurs 74A,74B. Ces orifices 75A,75B sont reliés de façon classique à une centrale à vide.

Les préhenseurs 74A,74B destinés à acheminer des banderoles-décors dans une même ligne d'alvéoles 16 sont portés par un même organe d'entraînement 76A,76B,77A,77B formant tringle, s'étendant parallèlement aux lignes d'alvéoles 16.

Les quatre tringles 76A,76B,77A,77B sont fixées par leurs extrémités sur des coulisseaux 78A,78B,80A,80B montés déplaçables le long de guides formant rails 82, s'étendant parallèlement aux colonnes d'alvéoles 16, fixés par des moyens connus aux montants 24 du châssis 22.

Un couple de tringles 76A,76B,77A,77B est disposé de chaque côté du moule, chaque couple comprenant une tringle 76A,77A portant les préhenseurs 74A destinés à introduire les banderoles-décors directement à l'intérieur des alvéoles 16 des éléments externes B1,B4, et une tringle 76B,77B portant les préhenseurs 74B destinés à introduire les banderoles-décors directement à l'intérieur des alvéoles 16 des éléments internes B2,B3.

Les moyens d'entraînement des tringles 76A,76B, 77A,77B, qui vont être décrits maintenant, sont adaptés pour que toutes les banderoles-décors parcourent les trajets séparant les couloirs de distribution 68A,68B des alvéoles 16 dans un temps identique quelques soient les différences de longueurs de ces trajets.

Comme on peut le voir sur les figures 3 et 8, les coulisseaux 78A,78B,80A,80B sont accrochés par des moyens connus sur des courroies d'entraînement 84A,84B, portées respectivement par des poulies d'entraînement 86,88 et des poulies de renvoi 90,92. Les poulies sont agencées de façon connue sur un support 93 représenté en traits mixtes sur la figure 8.

Les deux poulies d'entraînement 86,88 sont couplées entre elles par des moyens de réduction de vitesse de type connu comprenant une courroie de couplage 94, de manière que la vitesse de rotation de la poulie 86 entraînant la courroie 84A soit inférieure à la vitesse de rotation de la poulie 88 entraînant la courroie 84B.

Par ailleurs, la poulie 88 est accouplée de façon classique à un arbre d'entraînement non représenté sur les figures.

Sur la figure 8, on a représenté une courroie 84A et une courroie 84B toutes les deux disposées à une extrémité du moule 12. Des courroies similaires peuvent être disposées symétriquement par rapport à celles représentées à la figure 8, à une autre extrémité du moule 12.

Les coulisseaux 78A,80A, disposés symétriquement de part et d'autre du moule 12, solidaires des préhenseurs 74A se déplaçant suivant des trajets de longueurs identiques, sont accrochés l'un sur un premier brin supérieur de la courroie 84A et l'autre sur le second brin inférieur de cette courroie 84A de manière à se rapprocher simultanément l'un vers l'autre lorsque la courroie 84A est entraînée dans le sens d'introduction des banderoles-décors.

Les coulisseaux 78B,80B solidaires des préhenseurs 74B se déplaçant suivant des trajets de longueurs identiques, sont accrochés de façon analogue aux coulisseaux 78A,80A, sur la courroie 84B.

En position initiale d'introduction des banderoles-décors, tous les préhenseurs 74A,74B disposés d'un même côté du moule par rapport à l'axe médian X sont alignés. Pour permettre cet alignement, les tringles 76A,76B,77A,77B portant ces préhenseurs sont décalées entre elles en hauteur, chaque tringle inférieure 76A,77A comportant des évidements 96 formant logements pour les préhenseurs 74B d'une tringle supérieure 76B,77B.

Bien entendu, les coulisseaux 78B,80B se déplaçant à la vitesse la plus élevée sont disposés entre les coulisseaux 78A,80A se déplaçant à la vitesse la plus faible.

On décrira maintenant un cycle de thermoformage comprenant l'introduction des banderoles-décors directement à l'intérieur des alvéoles 16 du moule 12, en considérant que l'étape initiale de ce cycle correspond à la fin du thermoformage d'un lot de pots.

Au début du cycle, le moule 12 est en position haute de formage, telle que représentée à la figure 1.

Le cycle se poursuit par la descente du plateau de presse 18 et du moule 12 vers sa position basse, telle que représentée à la figure 3, pour l'introduction des banderoles-décors directement à l'intérieur des alvéoles 16.

La descente du moule 12 a pour effet de déplacer le tiroir 40 suivant l'axe X par coopération du galet 60 avec la rampe 64C de la glissière 62.

Les positions relatives des éléments B1 à B4 du moule 12, lorsque celui-ci est en position basse, ayant été déjà précisées plus haut, elles ne seront pas décrites à nouveau ci-dessous.

De façon classique, au cours de la descente du plateau de presse 18, les tambours 32 sont déplacés depuis leur position de formage, telle que représentée à la figure 1, jusqu'à leur position adaptée à l'introduction des banderoles-décors directement à l'intérieur des alvéoles, telle que représentée à la figure 3. Dans cette dernière position, les faces supérieures 32S des tambours sont sensiblement alignées avec la face supérieure 12S du moule 12.

De façon classique, les couloirs 68A,68B sont alimentés en banderoles-décors de manière que lorsque le moule 12 est en position basse, chaque couloir contient une banderole-décor en position d'attente.

On décrira maintenant l'étape d'introduction des banderoles-décors directement à l'intérieur des alvéoles 16 du moule.

Comme on peut le voir sur les figures 4 et 8, lorsque les banderoles-décors 72 sont en position d'attente, les préhenseurs 74A,74B, disposés d'un même côté du moule, sont alignés de manière à saisir, par aspiration d'air, les extrémités les plus éloignées des faces longitudinales 12L du moule des banderoles-décors correspondantes.

Les banderoles-décors 72 sont introduites simultanément directement à l'intérieur des alvéoles 16 correspondantes par déplacement en translation des tringles 76A,76B,77A,77B au moyen des courroies 84A,84B entraînées en mouvement.

Les banderoles-décors parcourent les trajets délimités par les fentes intermédiaires 70I et les fentes d'introduction 70 et s'enroulent autour des tambours 32 directement à l'intérieur des alvéoles 16 correspondantes.

La différence de vitesse entre les courroies 84A et 84B est adaptée pour que les préhenseurs 74A,74B atteignent tous simultanément leurs positions de fin d'introduction des banderoles-décors directement à l'intérieur des alvéoles 16, ceci indépendamment des différences de longueurs des trajets d'acheminement des banderoles-décors.

Sur les figures 4 et 8 on a représenté en traits mixtes les positions des préhenseurs 74A,74B en fin de course.

Après leur introduction directement à l'intérieur des alvéoles 16, les banderoles-décors sont relâchées par les préhenseurs 74A,74B, par arrêt de l'aspiration, puis les préhenseurs sont replacés en position d'attente par déplacement en sens inverse des courroies 84A,84B.

De façon classique, le bord par lequel une banderole-décor a été saisie dépasse par rapport à la face supérieure 12S du moule, après introduction de cette banderole-décor dans l'alvéole.

Après l'étape d'introduction des banderoles-décors directement à l'intérieur des alvéoles 16, le plateau de presse 18 est déplacé vers le haut de manière à amener le moule 12 dans sa position de formage telle que la face supérieure 12S du moule soit en contact avec le film thermoplastique.

On notera donc que, de façon classique, les bords saillants des banderoles-décors sont escamotés à l'intérieur des alvéoles 16 par contact avec le film thermosensible lors de la montée du moule 12.

La montée du plateau de presse 18 a également pour effet de déplacer le tiroir 40 dans un sens inverse à celui décrit lors de la descente du plateau de presse et de replacer le moule 12 dans sa configuration de formage.

Bien entendu, lors de la montée du plateau de presse 18, les tambours 32 sont déplacés de manière que les fonds 32S des alvéoles 16 soient en position de formage lorsque le moule 12 est en position haute.

Le cycle s'achève par l'opération classique de formage au cours de laquelle le moule 12 est dans sa position telle que représentée à la figure 1.

On décrira maintenant un dispositif de thermoformage selon un second mode de réalisation de l'invention, en regard des figures 10 à 15.

Sur ces figures les éléments analogues à ceux des figures 1 à 9 sont désignés par des références identiques.

Le dispositif de thermoformage représenté aux figures 10 à 15, désigné par la référence générale 10A, comporte un moule 12 comprenant quatre éléments B1 à B4 et vingt quatre alvéoles 16 de formage ménagées dans ces éléments de façon analogue au premier mode de réalisation.

Comme dans le premier mode de réalisation, les éléments B1 à B4 sont déplaçables entre eux de manière à permettre l'introduction de banderoles-décors directement à l'intérieur des alvéoles 16 du moule. Par contre, à la différence du premier mode de réalisation, lors de l'introduction des banderoles-décors directement à l'intérieur des alvéoles 16, les éléments internes B2,B3 sont décalés verticalement vers le bas par rapport aux éléments externes B1,B4.

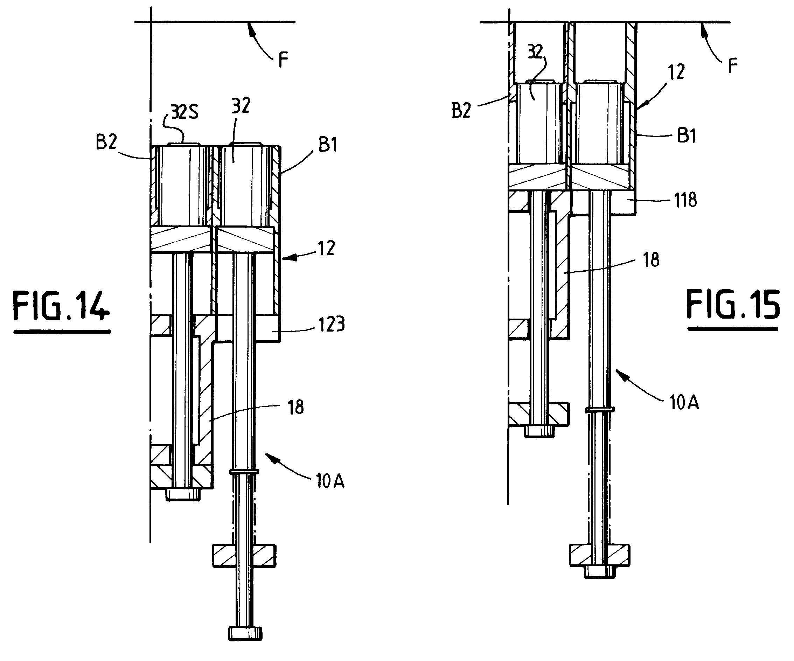

Sur les figures 10 à 12, on a représenté le moule 12 dans une configuration adaptée pour l'introduction des banderoles-décors directement à l'intérieur des alvéoles 16 (position basse du plateau de presse 18), et sur la figure 15 on a représenté le moule 12 dans une configuration adaptée pour le formage du film thermoplastique F (position haute du plateau de presse 18).

On décrira maintenant les moyens de déplacement relatif des éléments B1 à B4, selon le second mode de réalisation de l'invention.

Comme on peut le voir sur les figures 10 à 13, les éléments externes B1,B4 sont solidaires l'un de l'autre et forment un seul corps périphérique 98 comprenant une partie inférieure formant cadre 100 dans laquelle sont ménagées les chambres 28 de coulissement des plaques-supports 30, et deux parties supérieures 102,104, fixées sur le cadre 100, dans lesquelles sont ménagées les alvéoles 16.

Sur ces mêmes figures, on peut voir également que les éléments internes B2,B3 sont solidaires l'un de l'autre et forment un seul corps central 106. Une chambre 28 commune aux deux éléments B2,B3 est ménagée dans la partie inférieure de ce corps 106, une plaque-support 30, également commune à ces deux éléments, coulissant dans cette chambre 28.

Les deux corps 98,106 sont déplaçables verticalement l'un par rapport à l'autre, les éléments internes B2,B3 étant déplaçables à travers l'ouverture centrale 108 délimitée par le cadre 100.

Comme dans le premier mode de réalisation, les plaques-supports 30 sont portées par des tiges T1-T4 montées coulissantes à travers le plateau de presse 18 et commandées par des moyens connus non représentés sur les figures.

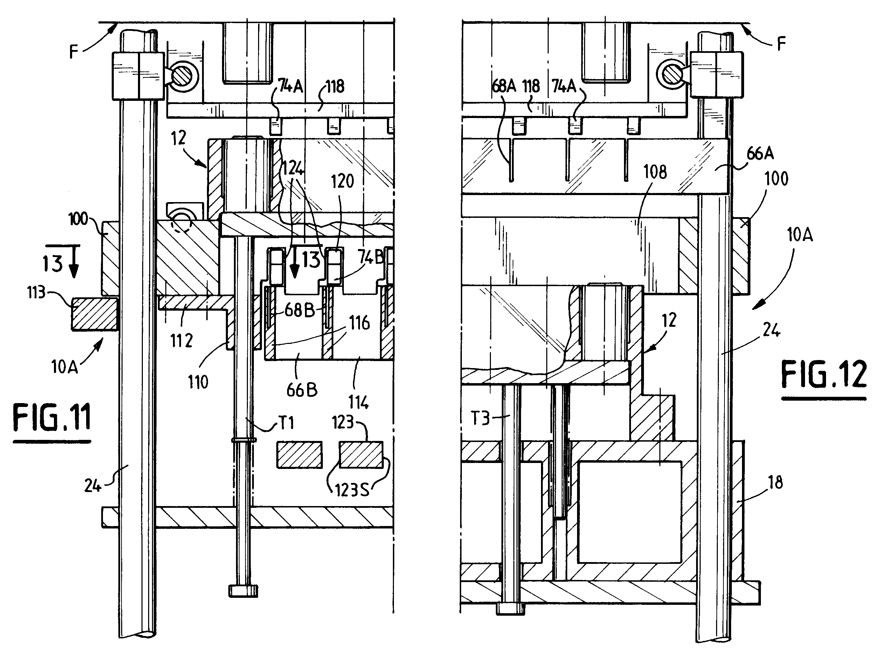

Comme on peut le voir en particulier sur les figures 10 et 11, les tiges T1,T4 portant les plaques-supports 30 déplaçables dans les éléments externes B1,B4, coulissent dans des guides 110 munis de flasques de fixation 112 vissés sur la face inférieure du cadre 100.

Les côtés du cadre 100 parallèles aux colonnes d'alvéoles 16 sont montés coulissants le long des montants 24 du châssis de manière à pouvoir désolidariser les éléments externes B1,B4 du plateau de presse 18, alors que les éléments internes B2,B3 sont fixés par des moyens connus sur le plateau de presse 18.

Lorsque le moule 12 a une configuration adaptée pour l'introduction des banderoles-décors, tous les éléments B1 à B4 sont abaissés par rapport à leur position de formage, les éléments internes B2,B3 fixés au plateau de presse 18 étant les plus bas et les deux éléments externes B1,B4 étant décalés vers le haut par rapport aux éléments internes B2,B3 et maintenus dans cette position par coopération du cadre 100 avec une butée fixe 113.

On décrira maintenant les moyens d'approvisionnement des banderoles-décors directement à l'intérieur des alvéoles 16 du moule 12, selon le second mode de réalisation de l'invention.

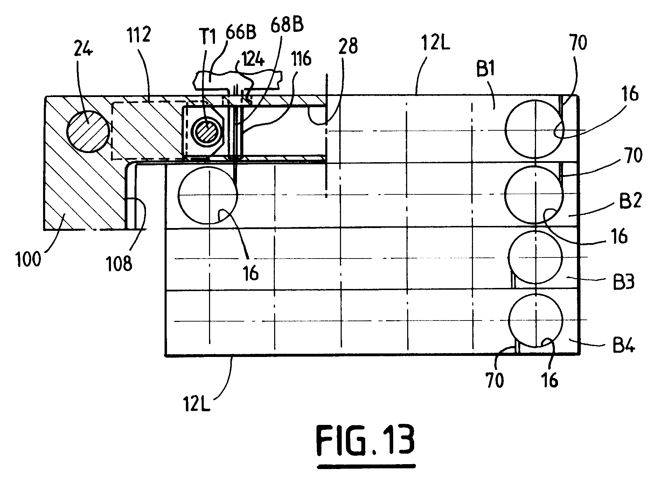

Comme on peut le voir sur la figure 13, les fentes 70 d'introduction de banderoles-décors directement à l'intérieur des alvéoles 16 d'une même colonne sont disposées dans un même plan parallèle à cette colonne.

Lorsque le moule 12 a une configuration adaptée au formage,les fentes d'introduction 70 ménagées dans les éléments internes B2,B3 sont masquées par les éléments externes B1,B4.

Lorsque le moule 12 a une configuration adaptée pour l'introduction de banderoles-décors directement à - l'intérieur des alvéoles 16, les fentes d'introduction 70, ménagées dans les éléments internes B2,B3, sont décalées vers le bas par rapport aux fentes d'introduction 70 ménagées dans les éléments externes B1,B4.

Les banderoles-décors 72, avant d'être introduites directement à l'intérieur des alvéoles 16, sont disposées dans quatre ensembles-distributeurs 66A,66B agencés par des moyens connus dans deux plans horizontaux décalés en hauteur.

Deux ensembles-distributeurs supérieurs 66A sont disposés de part et d'autre des éléments externes B1,B4 et comportent chacun, de façon classique, une rangée de couloirs d'attente 68A alignés avec les fentes d'introduction 70 des éléments externes B1,B4 lorsque ceux-ci sont en position basse d'introduction des banderoles-décors.

Deux ensembles-distributeurs inférieurs 66B sont disposés de part et d'autre des éléments internes B2,B3. Chacun des ces ensembles comprend un bloc 114 longitudinal et une rangée de branches 116 transversales venues de matière avec ce bloc 114. Des couloirs d'attente 68B sont ménagés dans les branches 116 et sont alignés avec les fentes d'introduction 70 des éléments internes B2,B3 lorsque ceux-ci sont en position basse d'introduction des banderoles-décors 72.

Sur la figure 10, on a représenté uniquement les ensembles-distributeurs 66A,66B disposés d'un même côté du moule 12, à droite en considérant cette figure.

En position d'attente, les banderoles-décors 72 sont positionnées dans les couloirs 68A,68B de façon analogue au premier mode de réalisation de l'invention.

Les banderoles-décors 72 sont acheminées depuis leur position d'attente vers les alvéoles 16 correspondantes en étant saisies par des préhenseurs à aspiration d'air 74A,74B analogues à ceux décrits dans le premier mode de réalisation de l'invention.

Les préhenseurs 74A destinés à l'acheminement des banderoles-décors directement à l'intérieur des alvéoles 16 des éléments externes B1 ,B4 sont portés par une tringle 118 reliée à des moyens d'entraînement à courroie analogues à ceux décrits dans le premier mode de réalisation de l'invention.

Les préhenseurs 74B destinés à l'acheminement des banderoles-décors directement à l'intérieur des alvéoles 16 des éléments internes B2,B3 sont portés par des doigts 120, parallèles aux colonnes d'alvéoles 16, solidaires d'une tringle 122 reliée à des moyens d'entraînement à courroie analogues à ceux décrits dans le premier mode de réalisation de l'invention.

Les extrémités en regard des fentes d'introduction 70 des couloirs supérieurs 68A et des couloirs inférieurs 68B disposés d'un même côté du moule 12, sont décalées entre elles, dans une direction parallèle aux couloirs, d'une distance correspondant sensiblement à la largeur d'un élément externe B1,B4 de manière que les trajets parcourus par les banderoles-décors 70 entre leur position d'attente dans les couloirs 68A,68B et les alvéoles 16 correspondantes aient tous une longueur identique. Ainsi, en se déplaçant à des vitesses identiques, les préhenseurs 74A,74B introduisent simultanément les banderoles-décors 72 dans toutes les alvéoles 16 du moule 12.

Le plateau de presse 18 comporte des ailes 123, s'étendant parallèlement aux éléments externes B1 ,B4, destinées à coopérer avec la face inférieure du cadre 100 de manière à déplacer ce dernier entre ses positions haute et basse.

Des saignées transversales 123S sont ménagées dans les ailes 123 de manière à délimiter des passages pour les branches 116 des ensembles-distributeurs inférieurs 66B et permettre la montée du plateau de presse 18 jusqu'à être en contact avec le cadre 100.

Afin de minimiser l'amplitude du décalage en hauteur entre les éléments externes B1,B4 et les éléments internes B2,B3, pour l'introduction des banderoles-décors directement à l'intérieur des alvéoles 16, des évidements 124 sont ménagés dans les côtés parallèles aux lignes d'alvéoles 16 du cadre 100. Ces évidements 124 permettent le passage, d'une part des banderoles-décors 72 destinées à être introduites directement à l'intérieur des alvéoles 16 des éléments internes B2,B3, et d'autre part des préhenseurs 74B qui sont associés à ces banderoles.

Les évidements 124 permettent également aux couloirs 68B inférieurs de s'étendre à travers les chambres 28 ménagées dans le cadre 100.

Le cycle de thermoformage du film F, au cours duquel a lieu l'introduction des banderoles-décors directement à l'intérieur des alvéoles 16 du moule, s'effectue de la façon suivante.

Au début du cycle, le moule 12 est en position haute de formage, telle que représentée à la figure 15.

Le cycle se poursuit par la descente du plateau de presse 18 vers sa position basse telle que représentée sur les figures 10 à 12.

La descente du plateau de presse 18 permet d'amener les éléments externes B1,B4 dans leur position d'introduction des banderoles-décors, à hauteur des ensembles-distributeurs supérieurs 66A. Les éléments externes B1,B4 sont maintenus dans cette position et désolidarisés du plateau de presse 18 par coopération du cadre 100 avec la butée fixe 113.

La descente du plateau de presse 18 se poursuit jusqu'à amener les éléments internes B2,B3 dans leur position d'introduction des banderoles-décors, à hauteur des ensembles-distributeurs inférieurs 66B.

Dans cette configuration du moule 12, les fonds 32S des alvéoles 16 sont sensiblement alignés avec les faces supérieures des éléments B1 à B4 dans lesquelles ils coulissent.

L'introduction des banderoles-décors directement à l'intérieur des alvéoles 16 se fait de façon analogue au premier mode de réalisation de l'invention, par déplacement simultané des tringles 118,122 portant les préhenseurs 74A,74B.

Sur la figure 10 on a représenté les préhenseurs 74A,74B dans leur position initiale, en trait plein, et dans leur position de fin de course, en traits mixtes.

Après l'étape d'introduction des banderoles-décors directement à l'intérieur des alvéoles 16, le plateau de presse 18 remonte de manière à atteindre une position intermédiaire telle que représentée à la figure 14. Dans cette position, les ailes 123 du plateau de presse 18 sont en contact avec la surface inférieure du cadre 100, et les surfaces supérieures des éléments B1 à B4 sont coplanaires.

La montée du plateau de presse 18 se poursuit de manière à amener l'ensemble du moule 12 dans sa position de formage au contact du film F, telle que représentée à la figure 15.

L'invention ne se limite pas aux modes de réalisation décrits.

Bien que dans les exemples on ait décrit un moule à quatre éléments, ce moule peut comporter deux éléments seulement ou plus de quatre éléments dans chacun desquels est ménagée une ligne d'alvéoles, les éléments pouvant être décalés entre eux longitudinalement ou verticalement pour l'introduction des banderoles-décors directement à l'intérieur des alvéoles. De plus chaque ligne d'alvéoles peut comporter un nombre variable d'alvéoles pouvant atteindre voire dépasser douze.

Les préhenseurs à aspiration d'air permettant de saisir les banderoles-décors peuvent être remplacés par des pinces de type classique munies de mâchoires entre lesquelles sont serrés les bords des banderoles-décors.

Par ailleurs, le dispositif de thermoformage selon l'invention peut être adapté pour déplacer certains éléments du moule longitudinalement et d'autres verticalement.

L'invention comporte de nombreux avantages.

Elle permet d'augmenter le nombre de lignes d'alvéoles dans un moule de thermoformage afin de produire en un seul cycle de thermoformage un lot comprenant un grand nombre de pots, par exemple supérieur ou égal à vingt quatre.

Le dispositif selon l'invention permet d'introduire simultanément directement à l'intérieur des alvéoles du moule toutes les banderoles-décors destinées à revêtir les pots d'un même lot.

Par ailleurs, le dispositif selon l'invention permet de fabriquer des pots revêtus par lots de vingt quatre ou plus, ceci en conservant des cadences de fabrication identiques à celles des dispositifs classiques de fabrication de pots revêtus par lots de douze.

## Revendications

1. Dispositif de thermoformage d'un film (F) thermoplastique pour la fabrication de récipients (P) destinés à être revêtus par des banderoles formant décors (72), du type comprenant un moule (12), de forme générale parallélépipèdique, comportant des alvéoles de formage (16) ouvertes sur sa face supérieure (12S), disposées suivant un réseau à mailles carrées définissant des lignes d'alvéoles (16) parallèles aux faces longitudinales (12L) du moule et des colonnes d'alvéoles (16) perpendiculaires à ces lignes, le moule (12) étant porté par un plateau de presse (18) déplaçable verticalement entre une position haute de formage et une position basse de démoulage, le dispositif comprenant de plus des moyens de distribution (66;66A,66B) et d'acheminement (74A,74B) des banderoles-décors (72) directement à l'intérieur des alvéoles (16) comprenant des couloirs (68A,68B) d'introduction des banderoles-décors directement à l'intérieur des alvéoles (16), caractérisé en ce que le moule (12) comprend au moins deux éléments (B1 à B4) déplaçables l'un par rapport à l'autre dans chacun desquels est ménagée une ligne d'alvéoles (16), chaque élément (B1 à B4) comportant des fentes (70) transversales d'introduction des banderoles-décors (72) directement à l'intérieur des alvéoles (16), le dispositif comprenant de plus des moyens (40,123) de déplacement relatif des éléments (B1 à B4) entre une configuration du moule (12) adaptée au formage, en position haute du plateau (18), dans laquelle le réseau d'alvéoles (16) est constitué, et une configuration du moule adaptée pour l'introduction de banderoles-décors (72) directement à l'intérieur des alvéoles (16), en position basse du plateau (18), dans laquelle toutes les fentes (70) du moule (12) sont mises en communication avec les couloirs (68A,68B) correspondants de distribution des banderoles-décors (72).

2. Dispositif de thermoformage selon la revendication 1, caractérisé en ce que les couloirs de distribution (68A,68B) sont disposés dans un même plan horizontal, en ce que les moyens de déplacement relatif des éléments (B1 à B4) comprennent des moyens (40) de décalage longitudinal des éléments (B1 à B4) entre eux permettant d'aligner chaque fente d'introduction (70), masquée lorsque le moule est en configuration de formage, avec une fente intermédiaire (70I) ménagée transversalement dans chaque élément disposé entre cette fente d'introduction (70) et les couloirs de distribution (68A,68B), et en ce que les moyens d'acheminement des banderoles-décors (72) directement à l'intérieur des alvéoles (16) comportent des moyens d'entraînement (84A,84B) ayant des vitesses adaptées pour que les banderoles-décors parcourent les trajets entre les couloirs de distribution (68A,68B) et les alvéoles (16) dans un temps identique quelques soient les différences de longueurs de ces trajets.

3. Dispositif de thermoformage selon la revendication 1, caractérisé en ce que les moyens de distribution comprennent au moins deux ensembles-distributeurs (66A,66B), comportant chacun une rangée de couloirs (68A,68B), disposés dans des plans horizontaux décalés en hauteur, en ce que les moyens de déplacement relatif des éléments (B1 à B4) comprennent des moyens (123) de décalage vertical des éléments (B1 à B4) entre eux permettant de positionner chacun des éléments (B1 à B4) de manière que ses fentes d'introduction (70) soient alignées avec une rangée de couloirs de distribution (68A,68B) correspondants, les trajets entre les couloirs de distribution (68A,68B) et les fentes d'introduction (70) correspondantes étant tous de longueurs identiques.

4. Dispositif de thermoformage selon l'une quelconque des revendications 1 à 3, caractérisé en ce que le moule (12) comprend quatre éléments (B1 à B4) dans chacun desquels est ménagée une ligne d'alvéoles, chaque fente d'introduction (70) ménagée dans ces éléments étant orientée d'une alvéole (16) correspondante vers la face longitudinale (12L) du moule la plus proche de cette alvéole (16).

5. Dispositif de thermoformage selon les revendications 2 et 4 prises ensemble, caractérisé en ce que les moyens de décalage longitudinal comprennent un tiroir (40) monté coulissant longitudinalement sur le plateau de presse (18), le moule (12) comprenant deux éléments (B1,B3) solidaires du tiroir (40) alternant chacun avec deux éléments (B2,B4) solidaire du plateau de presse (18), le déplacement longitudinal (Y) du tiroir (40) étant commandé par le déplacement vertical du plateau de presse (18).

6. Dispositif de thermoformage selon la revendication 5, caractérisé en ce que les moyens de commande du déplacement du tiroir (40) comprennent un bras (58) de traction, solidaire du tiroir (40), comportant à son extrémité libre un galet (60) destiné à coopérer avec une glissière (62) fixe, s'étendant sensiblement verticalement, munie d'une rampe (64C) orientée de manière à déplacer le bras (58) longitudinalement lorsque le galet (60) se déplace verticalement conjointement avec le plateau de presse (18).

7. Dispositif de thermoformage selon la revendication 5 ou 6, caractérisé en ce que le tiroir (40) comprend deux évidements d'extrémité (54) et une lumière centrale (56) permettant à l'élément (B2) intercalé entre les deux éléments (B1,B3) solidaires du tiroir (40) d'être en appui sur des cales (34,36) fixées sur le plateau de presse (18).

8. Dispositif de thermoformage selon la revendication 2 ou l'une quelconque des revendications 4 à 7, caractérisé en ce que les moyens d'acheminement comprennent des préhenseurs (74A,74B) coopérant chacun avec une banderole-décor, les préhenseurs (74A,74B) destinés à acheminer des banderoles-décors (72) sur des trajets de longueurs identiques étant portés par deux tringles (76A,76B,77A,77B) se déplaçant dans des sens opposés, solidaires d'un organe d'entraînement (84A,84B) commun, les rapports de vitesse entre les deux organes d'entraînement (84A,84B) étant adaptés aux différentes longueurs des trajets de manière à les parcourir en un temps identique.

9. Dispositif de thermoformage selon la revendication 8, caractérisé en ce que chaque organe d'entraînement comprend une courroie (84A,84B), les courroies (84A,84B) des organes d'entraînement étant couplées entre elles par des moyens de réduction de vitesse à courroie (94) de manière que la vitesse des préhenseurs (74A) se déplaçant sur les trajets les plus courts soit inférieure à la vitesse des préhenseurs (74B) se déplaçant sur les trajets les plus longs, les deux tringles (76A,76B,77A, 77B) se déplaçant à des vitesses identiques étant disposées symétriquement par rapport à l'axe longitudinal médian (X) du moule (12), la première tringle (76A,76B) étant accrochée à un premier brin de la courroie (84A, 84B) correspondante, et la seconde tringle (77A,77B) étant accrochée au second brin de cette courroie (84A, 84B).

10. Dispositif de thermoformage selon la revendication 8 ou 9, caractérisé en ce que les tringles (76A, 76B,77A,77B), destinées à se déplacer dans un même sens, sont disposées l'une au-dessus de l'autre, la tringle inférieure (76A,77A) comportant des évidements (96) formant logement pour les préhenseurs (74B) portés par la tringle supérieure (76B,77B) de manière que les préhenseurs (74A,74B) portés par ces tringles soient alignés entre eux en position initiale d'introduction des banderoles-décors (72) directement à l'intérieur des alvéoles (16).

11. Dispositif de thermoformage selon les revendications 3 et 4 prises ensemble, caractérisé en ce que les deux éléments (B2,B3) disposés au milieu du moule, appelés éléments internes, sont solidaires l'un de l'autre et forment un seul corps central (106) fixé sur le plateau de presse (18), en ce que les deux éléments (B1,B4) délimitant les faces longitudinales du moule (12), appelés éléments externes, sont solidaires l'un de l'autre et forment un seul corps périphérique (98) monté coulissant sur des montants verticaux fixes (24), en ce que le plateau de presse (18) comporte des ailes (123), s'étendant parallèlement aux éléments externes (B1,B4), destinées à coopérer avec la face inférieure du corps périphérique (98) de manière à déplacer ce dernier, et en ce que les moyens de décalage vertical des éléments (B1 à B4) entre eux comprennent une butée fixe (113) destinée à désolidariser le corps périphérique (98) du plateau de presse (18), lorsque ce dernier descend vers sa position basse, et à positionner le corps périphérique (98) à hauteur des couloirs de distribution supérieurs (68A), le corps central (106) étant à hauteur des couloirs de distribution inférieurs (68B), lorsque le plateau de presse (18) est en position basse.

12. Dispositif de thermoformage selon la revendication 11, caractérisé en ce que le corps périphérique (98) comprend une partie inférieure formant cadre (100), et deux parties supérieures (102,104), fixées sur le cadre (100), dans lesquelles sont ménagées les alvéoles (16) des éléments externes (B1,B4), les côtés du cadre (100) parallèles aux colonnes d'alvéoles (16) du moule (12) étant montés coulissants le long des montants (24).

13. Dispositif de thermoformage selon la revendication 11 ou 12, caractérisé en ce que chaque ensemble-distributeur inférieur (66B) comporte des branches (116) transversales dans lesquelles sont ménagés les couloirs (68B), les extrémités en regard des fentes d'introduction (70) des couloirs supérieurs (68A) et des couloirs inférieurs (68B) disposés d'un même côté du moule (12), étant décalées entre elles, dans une direction parallèle aux couloirs (68A,68B), d'une distance correspondant sensiblement à la largeur d'un élément externe (B1,B4), et en ce que les ailes (123) du plateau de presse (18) comportent des saignées transversales (123S) formant des passages pour les branches (116) de chaque ensemble-distributeur inférieur (66B).

14. Dispositif de thermoformage selon les revendications 3 et 4 prises ensemble ou l'une quelconque des revendications 11 à 13, caractérisé en ce que les moyens d'acheminement comprennent des préhenseurs (74A,74B) coopérant chacun avec une banderole-décor, les préhenseurs (74A,74B) destinés à acheminer des banderoles-décors dans des alvéoles (16) d'un même élément (B1 à B4) étant portés par une même tringle (118,122) solidaire de moyens d'entraînement à courroies, toutes les tringles (118,122) se déplaçant à des vitesses identiques.

15. Dispositif de thermoformage selon l'une quelconque des revendications 8 à 10 ou selon la revendication 14, caractérisé en ce que les préhenseurs (74A, 74B) sont du type à aspiration d'air.

16. Dispositif de thermoformage selon l'une quelconque des revendications précédentes, caractérisé en ce que chaque élément (B1 à B4) comporte une partie supérieure dans laquelle sont ménagées les alvéoles (16) et une partie inférieure creuse délimitant une chambre (28), sensiblement prismatique, ouverte sur la face inférieure (12I) du moule, dans laquelle est montée coulissante une plaque (30) horizontale formant support pour des tambours (32) déplaçables dans les alvéoles (16), la face supérieure (32S) de chaque tambour (32) délimitant un fond mobile de l'alvéole (16) dans laquelle il coulisse.

17. Dispositif de thermoformage selon les revendications 12 et 16 prises ensemble, caractérisé en ce que les chambres (28) des éléments externes (B1,B4) sont ménagées dans le cadre (100) et en ce que les éléments internes (B2,B3) comportent une chambre (28) commune et une plaque-support (30) coulissante commune.

## Claims

1. An arrangement for hot forming a thermoplastic foil (F) for the manufacture of cases (P) coated by bands (72) serving as decorates of the type containing a formwork (12) of a substantially parallel epipedic configuration that carries on the surface (12S) thereof open forming cells (16) arranged in accordance with a square grid defining rows of cells extending in parallel to the longitudinal sides (12L) of the formwork and columns of cells (16) extending in a direction perpendicular to the said rows, with the formwork (12) being carried by a press plate (18) vertically displaceable between a high forming position and a low formworking position, with the arrangement, in addition, including means for distributing (66;66A,66B) and for transporting (74A, 74B) the decorative bands (72) directly into the interior of the cells (16) comprising tracks (68A, 68B) for introducing the decorative bands directly into the interior of the cells (16), characterized in that the formwork (12) includes at least two parts (B1 through B4) displaceable relative to one another, in which is respectively worked one row of cells (16), with each part (B1 through B4) carrying transversely extending slots (70) for the introduction of decorative bands (72) directly into the interior of the cells (16), with the arrangement, in addition, including means (40,123) for displacing the parts (B1 through B4) relative to one another between a configuration of the formwork (12) suitable for forming purposes in the high position of the plate (18) in which the grid of the cells (16) is created and a configuration of the formwork suitable for introducing the decorative bands (72) directly into the interior of the cells (16) in the low position of the plate (18) in which all slots (70) of the formwork (12) are in communication with the corresponding tracks (68A, 68B) for distributing the decorative bands (72).

2. A hot forming arrangement according to claim 1, characterized in that the distributor tracks (68A, 68B) are arranged in the same horizontal plane, that the means for displacing the parts (B1 through B4) relative to one another include means (40) for displacing the parts (B1 through B4) in the longitudinal direction with respect to one another enabling each slot of introduction (70) masked once the formwork is in the forming position, to register with a connecting slot (70l) transversely extending in each part and arranged between the said slot of introduction (70) and the distributor tracks (68A, 68B), and that the means for transporting the decorative bands (72) into the cells (16) include actuating means (84A, 84B) having so adjusted speeds that the decorative bands pass through the paths between the distributor tracks (68A, 68B) and the cells (16) within the same period of time irrespective of the differences in length of the said paths.

3. A hot forming arrangement according to claim 1, characterized in that the distributor means comprise at least two distributor units (66A, 68B) respectively including one row of tracks (68A, 68B) arranged in horizontal planes displaced in height with respect to one another, that the means for displacing the parts (B1 through B4) relative to one another include means (123) for vertically displacing the parts (B1 through B4) relative to one another enabling each of the parts (B1 through B4) to be placed into position such that the introduction slots (70) thereof are in registry with a row of corresponding distributor tracks (68A, 68B), with all paths between the introduction tracks (68A, 68B) and the corresponding introduction slots (70) being of the same length.

4. A hot forming arrangement according to any one of claims 1 through 3, characterized in that the formwork (12) comprises four parts (B1 through B4) in which is respectively worked one row of cells, with each introduction slot (70) worked in these parts extending from a corresponding cell (16) toward the longitudinal side (12L) closest to the said cell (16).

5. A hot forming arrangement jointly according to claims 2 and 4, characterized in that the longitudinally displaceable means include a slide (40) arranged on the press plate (18) in a manner longitudinally displaceable, with the formwork (12) including two parts (B1,B3) rigidly connected to the slide (40) and respectively arranged between two parts (B2, B4) rigidly connected to the press plate (18), with the displacement (Y) of the slide (40) being longitudinally controlled through the vertical displacement of the press plate (18).

6. A hot forming arrangement according to claim 5, characterized in that the means for controlling the displacement of the slide (40) include a tractor arm (58) rigidly connected to the slide and, on the free end thereof, carrying a roller (60) intended to cooperate with a stationary slide rail (62) extending in a direction substantially vertical and provided with a ramp (64C) so oriented that the arm (58) is longitudinally moved once the roller (60) moves together with the press plate (18) in the vertical direction.

7. A hot forming arrangement according to claims 5 or 6, characterized in that the slide (40) includes two end recesses (54) and a central opening (56) enabling the part (B2) lying between the parts (B1,B3) rigidly connected to the slide (40) to get into abutment with blocks (34,36) fixed to the press plate (18).

8. A hot forming arrangement according to claim 2 or according to any one of claims 4 though 7, characterized in that the conveyor means comprise gripper members (74A, 74B) of which each cooperates with a decorative band, wherein the gripper members (74A, 74B) intended to transport decorative bands (72) on tracks of equal length are carried by two bars (76A, 97B, 77A, 77B) moving toward one another in opposite directions and are rigidly connected to a common driving member (84A, 84B), with the ratio of the speeds of the two driving members (84A, 84B) with respect to one another being adapted to the different track lengths in such a way that passage therethrough is within the same period of time.

9. A hot forming arrangement according to claim 8, characterized in that each driving member includes a driving belt (84A, 84B), with the driving belts (84A, 84B) of the driving members being so coupled to one another by means (94) for reducing the speed of driving belts that the speed of the gripping members (74A) moving along the shortest tracks is less than the speed of the gripping elements (74B) moving on the longest tracks, wherein the two bars (76A, 76B, 77A, 77B) move at the same speed and, relative to the longitudinal central axis (X) of the formwork (12) are arranged in symmetry, with the former bar (76A, 76B) being fixed to a first rack of the corresponding driving belt (84A, 84B) and the second bar (77A, 77B) being fixed to the second rack of the said driving belts (84A, 84B).

10. A hot forming arrangement according to claims 8 or 9, characterized in that the bars (76A, 76B, 77A, 77B) intended to move in the same direction, are superposed, with the bottom bar (76A, 77A) being provided with recesses (96) serving as receiving elements for the gripping members (74B) carried by the upper bar (76B, 77B) such that the gripping members (74A, 74B) carried by the said bars, in the starting position of the introduction of the decorative bands (72) directly into the interior of the cells (16), are series arranged.

11. A hot forming arrangement jointly according to claims 3 and 4, characterized in that the two parts (B2, B3) - called internal parts - arranged centrally of the formwork are rigidly interconnected to form a single central body (106) fixed to the press plate (18), that the two parts (B1,B4) - called outer parts - confining the longitudinal sides of the formwork (12) are rigidly interconnected to form a single peripheral body (98) slidably provided on vertical, stationary racks (24), that the press plate (18) includes vanes (123) extending in parallel to the outer sides (B1,B4) and intended to cooperate with the bottom side of the peripheral body (98) to displace the same, and that the means for vertically displacing the parts (B1 through B4) relative to one another include a stationary stop (113) serving to separate the peripheral body (98) from the press plate (18) once the same moves into its bottom position and to place the peripheral body (98) at the level of the distributor tracks (68A) into position, while the central body (106) is at the level of the bottom distributor tracks (68B) once the press plate (18) is in the bottom position.

12. A hot forming arrangement according to claim 11, characterized in that the peripheric body (98) comprises a bottom part forming a rack (100) and two upper parts (102,104) provided on the rack (100) in which upper parts are formed the cells (16) of the outer parts (B1, B4), with the sides of the rack (100) extending in parallel to the columns of cells (16) of formwork (12) being slidably provided along the racks (24).

13. A hot forming arrangement according to claims 11 or 12, characterized in that each of the bottom distributor arrangements (66B) includes arms (116) extending in the transverse direction, with the ends of the upper tracks (68A) located opposite the introduction slots (70), and of the bottom tracks (68B) located on the same side of the formwork (12) in a direction parallel to the tracks (68A,68B) being displaced relative to one another by a distance in a direction substantially corresponding to the width of an outer part (B1, B4), and that the vanes (123) of the press plate (18) include slots (123S) extending in a transverse direction and forming passageways for the arms (116) of each bottom distributor arrangement (66B).

14. A hot forming arrangement jointly according to claims 3 and 4, or according to any one of the preceding claims 11 to 13, characterized in that the conveyor means comprise gripper means (74A, 74B) of which each cooperates with a decorative band, wherein the gripper members (74A, 74B) intended to transport decorative bands to cells (16) of the same part (B1 through B4) are carried by the same bar (118,122) rigidly connected to driving means including driving belts, with all bars (118,122) moving at the same speed.

15. A hot forming arrangement according to any one of claims 8 to 10 or according to claim 14, characterized in that the gripping members (74A, 74B) are of the air aspirating type.

16. A hot forming arrangement according to any one of the preceding claims, characterized in that each part (B1 through B4) includes an upper part in which are formed the cells (16), and a lower hollow part confining a substantially prismatic chamber (28) open at the bottom side (121) of the formwork and in which is slidably provided a horizontal plate (30) carrying within the cells (16) movable drums (32), with the upper side (32S) of each drum (32) confining a movable bottom of the cells (16) within which it slidably moves.

17. A hot forming arrangement jointly according claims 12 and 16, characterized in that the chambers (28) of the outer parts (B1, B4) are worked in the rack (100), and that the inner parts (B2,B3) comprise a common chamber (28) and a common sliding support plate (30).

## Patentansprüche

1. Vorrichtung zur Warmformung einer thermoplastischen Folie (F) zur Herstellung von Behältern (P), die mit als Dekor dienenden Banderolen (72) ummantelt sind, des Typs, der eine im wesentlichen parallelepipedische Form (12) enthält, die an ihrer Oberfläche (12S) offene Formungszellen (16) trägt, die einem quadratischen Gitter entsprechend angeordnet sind, das parallel zu den Längsseiten (12L) der Form verlaufende Reihen von Zellen definiert und zu diesen Reihen senkrechte Spalten von Zellen (16), wobei die Form (12) von einer zwischen einer hohen Stellung zur Formung und einer niedrigen Stellung zum Ausformen vertikal verschiebbaren Pressenplatte (18) getragen wird, wobei die Vorrichtung darüber hinaus Mittel zur Verteilung (66; 66A, 66B) und Beförderung (74A, 74B) der Dekorbanderolen (72) direkt ins Innere der Zellen (16) aufweist, die Bahnen (68A, 68B) zur Einführung der Dekorbanderolen direkt ins Innere der Zellen (16) umfassen, dadurch gekennzeichnet, daß die Form (12) mindestens zwei relativ zueinander verschiebbare Teile (B1 bis B4) enthält, in denen jeweils eine Reihe von Zellen (16) ausgearbeitet ist, wobei jeder Teil (B1 bis B4) quer verlaufende Schlitze (70) zur Einführung der Dekorbanderolen (72) direkt ins Innere der Zellen (16) trägt, wobei die Vorrichtung außerdem Mittel (40, 123) zur Verschiebung der Teile (B1 bis B4) relativ zueinander zwischen einer zur Formung in der hohen Stellung der Platte (18) geeigneten Konfiguration der Form (12), in der das Gitter der Zellen (16) gebildet wird, und einer Konfiguration der Form, die zur Einführung der Dekorbanderolen (72) direkt ins Innere der Zellen (16) in der niedrigen Stellung der Platte (18) geeignet ist, in der alle Schlitze (70) der Form (12) mit den entsprechenden Bahnen (68A, 68B) zur Verteilung der Dekorbanderolen (72) in Verbindung stehen.

2. Warmformungsvorrichtung gemäß Patentanspruch 1, dadurch gekennzeichnet, daß die Verteilerbahnen (68A,68B) in derselben horizontalen Ebene angeordnet sind, daß die Mittel zur Verschiebung der Teile (B1 bis B4) relativ zueinander Mittel (40) zur Verschiebung der Teile (B1 bis B4) in Längsrichtung zueinander enthalten, die die Ausrichtung jedes Einführungsschlitzes (70), der verdeckt ist, wenn sich die Form in der Formungsstellung befindet, mit einem in jedem Teil quer verlaufenden Verbindungsschlitz (70I), der zwischen diesem Einführungsschlitz (70) und den Verteilerbahnen (68A, 68B) angeordnet ist, ermöglichen und daß die Mittel zur Beförderung der Dekorbanderolen (72) in die Zellen (16) Antriebsmittel (84A, 84B) enthalten, die derart eingestellte Geschwindigkeiten aufweisen, daß die Dekorbanderolen die Wege zwischen den Verteilerbahnen (68A, 68B) und den Zellen (16) in derselben Zeit durchlaufen, unabhängig von den Unterschieden in der Länge dieser Wege.

3. Warmformungsvorrichtung gemäß Patentanspruch 1, dadurch gekennzeichnet, daß die Verteilermittel mindestens zwei Verteileinheiten (66A, 66B) umfassen, die jeweils eine Reihe von Bahnen (68A, 68B) enthalten, die in in der Höhe zueinander versetzten, horizontalen Ebenen angeordnet sind, daß die Mittel zur Verschiebung der Teile (B1 bis B4) relativ zueinander Mittel (123) zur vertikalen Verschiebung der Teile (B1 bis B4) relativ zueinander enthalten, die es erlauben, jedes der Teile (B1 bis B4) in eine derartige Stellung zu bringen, daß ihre Einführungsschlitze (70) mit einer Reihe von entsprechenden Verteilerbahnen (68A, 68B) ausgerichtet sind, wobei alle Wege zwischen den Einführbahnen (68A, 68B) und den entsprechenden Einführungsschlitzen (70) dieselbe Länge haben.

4. Warmformungsvorrichtung gemäß irgendeinem der Patentansprüche 1 bis 3, dadurch gekennzeichnet, daß die Form (12) vier Teile (B1 bis B4) umfaßt, in denen jeweils eine Reihe von Zellen ausgearbeitet ist, wobei jeder in diesen Teilen ausgearbeitete Einführungsschlitz (70) von einer entsprechenden Zelle (16) zur dieser Zelle (16) nächstliegenden Längsseite (12L) der Form verläuft.

5. Warmformungsvorrichtung gemäß Patentansprüchen 2 und 4 gemeinsam, dadurch gekennzeichnet, daß die Mittel zur Verschiebung in Längsrichtung einen in Längsrichtung auf der Pressenplatte (18) verschiebbar angebrachten Schieber (40) enthalten, wobei die Form (12) zwei mit dem Schieber (40) fest verbundene Teile (B1, B3) aufweist, die jeweils zwischen zwei mit der Pressenplatte (18) fest verbundenen Teilen (B2, B4) angeordnet sind, wobei die Verschiebung (Y) des Schiebers (40) in Längsrichtung durch die vertikale Verschiebung der Pressenplatte (18) gesteuert wird.

6. Warmformungsvorrichtung gemäß Patentanspruch 5, dadurch gekennzeichnet, daß die Mittel zur Steuerung der Verschiebung des Schiebers (40) einen mit dem Schieber (40) fest verbundenen Zugarm (58) enthalten, der an seinem freien Ende eine Rolle (60) trägt, die dazu bestimmt ist, mit einer festen, im wesentlichen vertikal verlaufenden Gleitschiene (62) zusammenzuarbeiten, die mit einer Rampe (64C) versehen ist, die derart orientiert ist, daß der Arm (58) in Längsrichtung bewegt wird, wenn sich die Rolle (60) gemeinsam mit der Pressenplatte (18) vertikal bewegt.

7. Warmformungsvorrichtung gemäß Patentanspruch 5 oder 6, dadurch gekennzeichnet, daß der Schieber (40) zwei Endaussparungen (54) und eine zentrale Öffnung (56) aufweist, die dem zwischen den beiden mit dem Schieber (40) fest verbundenen Teilen (B1, B3) liegenden Teil (B2) ermöglichen, an an der Pressenplatte (18) befestigten Blöcken (34, 36) anzulegen.

8. Warmformungsvorrichtung gemäß Patentanspruch 2 oder irgendeinem der Patentansprüche 4 bis 7, dadurch gekennzeichnet, daß die Beförderungsmittel Greiforgane (74A, 74B) umfassen, von denen jedes mit einer Dekorbanderole zusammenarbeitet, wobei die Greiforgane (74A, 74B), die dazu bestimmt sind, Dekorbanderolen (72) auf Wegen gleicher Länge zu befördern, von zwei Stangen (76A, 76B, 77A, 77B) getragen werden, die sich in entgegengesetzer Richtung zueinander bewegen und mit einem gemeinsamen Antriebsorgan (84A, 84B) fest verbunden sind, wobei das Verhältnis der Geschwindigkeiten der beiden Antriebsorgane (84A, 84B) zueinander derart an die unterschiedlichen Weglängen angepaßt ist, daß sie in derselben Zeit durchlaufen werden.

9. Warmformungsvorrichtung gemäß Patentanspruch 8, dadurch gekennzeichnet, daß jedes Antriebsorgan einen Treibriemen (84A, 84B) enthält, wobei die Treibriemen (84A, 84B) der Antriebsorgane durch Mittel zur Geschwindigkeitsverringerung für Treibriemen (94) derart aneinander gekuppelt sind, daß die Geschwindigkeit der Greiforgane (74A), die sich auf den kürzesten Wegen bewegen, geringer ist, als die Geschwindigkeit der Greiforgane (74B), die sich auf den längsten Wegen bewegen, wobei sich die beiden Stangen (76A, 76B, 77A, 77B) mit gleicher Geschwindigkeit bewegen und relativ zur Längsmittelachse (X) der Form (12) symmetrisch angeordnet sind, wobei die erste Stange (76A, 76B) an einem ersten Trumm des entsprechenden Treibriemens (84A, 84B) befestigt ist und die zweite Stange (77A, 77B) am zweiten Trumm dieses Treibriemens (84A, 84B).

10. Warmformungsvorrichtung gemäß Patentanspruch 8 oder 9, dadurch gekennzeichnet, daß die Stangen (76A, 76B, 77A, 77B), die dazu bestimmt sind, sich in derselben Richtung zu bewegen, übereinander angeordnet sind, wobei die untere Stange (76A, 77A) Aussparungen (96) aufweist, die als Aufnahmen für die von der oberen Stange (76B, 77B) getragenen Greiforgane (74B) dienen, derart, daß die von diesen Stangen getragenen Greiforgane (74A, 74B) in der Ausgangsstellung der Einführung der Dekorbanderolen (72) direkt ins Innere der Zellen (16) in einer Reihe angeordnet sind.

11. Warmformungsvorrichtung gemäß Patentansprüchen 3 und 4 gemeinsam, dadurch gekennzeichnet, daß die beiden in der Mitte der Form angeordneten, Innenteile genannten Teile (B2, B3) fest miteinander verbunden sind und einen einzigen, an der Pressenplatte (18) befestigten Zentralkörper (106) bilden, daß die beiden die Längsseiten der Form (12) begrenzenden, Außenteile genannten Teile (B1, B4) fest miteinander verbunden sind und einen einzigen peripheren Körper (98) bilden, der an vertikalen, feststehenden Ständern (24) gleitend angebracht ist, daß die Pressenplatte (18) Flügel (123) aufweist, die sich parallel zu den Außenteilen (B1, B4) erstrecken und dazu bestimmt sind, mit der Unterseite des peripheren Körpers (98) zusammenzuarbeiten, um diesen zu verschieben, und daß die Mittel zur Vertikalverschiebung der Teile (B1 bis B4) relativ zueinander einen feststehenden Anschlag (113) enthalten, der dazu dient, den peripheren Körper (98) von der Pressenplatte (18) zu lösen, wenn sich diese in ihre untere Stellung bewegt, und den peripheren Körper (98) in Höhe der oberen Verteilerbahnen (68A) in Stellung zu bringen, während der Zentralkörper (106) in Höhe der unteren Verteilerbahnen (68B) ist, wenn sich die Pressenplatte (18) in der unteren Stellung befindet.

12. Warmformungsvorrichtung gemäß Patentanspruch 11 dadurch gekennzeichnet, daß der periphere Körper (98) einen ein Gestell (100) bildenden unteren Teil und zwei am Gestell (100) angebrachte obere Teile (102, 104) umfaßt, in denen die Zellen (16) der Außenteile (B1, B4) ausgearbeitet sind, wobei die zu den Spalten der Zellen (16) der Form (12) parallelen Seiten des Gestells (100) den Ständern (24) entlang gleitend angebracht sind.

13. Warmformungsvorrichtung gemaß Patentanspruch 11 oder 12, dadurch gekennzeichnet, daß jede untere Verteileranordnung (66B) quer verlaufende Arme (116) enthält, in denen die Bahnen (68B) angeordnet sind, wobei die den Einführungsschlitzen (70) gegenüberliegenden Enden der oberen Bahnen (68A) und der unteren Bahnen (68B), die sich an derselben Seite der Form (12) befinden, in einer Richtung parallel zu den Bahnen (68A, 68B) relativ zueinander um eine Strecke versetzt sind, die im wesentlichen der Breite eines Außenteiles (B1, B4) entspricht, und daß die Flügel (123) der Pressenplatte (18) querverlaufende Schlitze (123S) aufweisen, die Durchgänge für die Arme (116) jeder unteren Verteileranordnung (66B) bilden.

14. Warmformungsvorrichtung gemäß Patentansprüchen 3 und 4 gemeinsam oder irgendeinem der Patentansprüche 11 bis 13, dadurch gekennzeichnet, daß die Beförderungsmittel Greiforgane (74A, 74B) umfassen, von denen jedes mit einer Dekorbanderole zusammenarbeitet, wobei die Greiforgane (74A, 74B), die dazu bestimmt sind, Dekorbanderolen in Zellen (16) desselben Teiles (B1 bis B4) zu befördern, von derselben Stange (118, 122) getragen werden, die mit Antriebsmitteln mit Treibriemen fest verbunden ist, wobei sich alle Stangen (118, 122) mit gleicher Geschwindigkeit bewegen.

15. Warmformungsvorrichtung gemäß irgendeinem der Patentansprüche 8 bis 10 oder gemäß Patentanspruch 14, dadurch gekennzeichnet, daß die Greiforgane (74A, 74B) vom Luft ansaugenden Typ sind.

16. Warmformungsvorrichtung gemäß irgendeinem der vorangehenden Patentansprüche, dadurch gekennzeichnet, daß jedes Teil (B1 bis B4) einen oberen Teil enthält, in dem die Zellen (16) ausgearbeitet sind, und einen unteren hohen Teil, der eine im wesentlichen prismatische Kammer (28) begrenzt, die an der Unterseite (12I) der Form offen ist und in der eine horizontale Platte (30) gleitend angebracht ist, die in den Zellen (16) bewegliche Trommeln (32) trägt, wobei die Oberseite (32S) jeder Trommel (32) einen beweglichen Boden der Zelle (16), in der er gleitet, begrenzt.

17. Warmformungsvorrichtung gemäß Patentansprüchen 12 und 16 gemeinsam, dadurch gekennzeichnet, daß die Kammern (28) der Außenteile (B1, B4) im Gestell (100) ausgearbeitet sind und daß die Innenteile (B2, B3) eine gemeinsame Kammer (28) und eine gemeinsame gleitende Tragplatte (30) aufweisen.
